(19) Europäisches Patentamt
European Patent Office
Office européen des brevets

(11) **EP 1 894 958 B1**

(12) **EUROPEAN PATENT SPECIFICATION**

(45) Date of publication and mention
of the grant of the patent:
**08.12.2010 Bulletin 2010/49**

(51) Int Cl.:
***C08G 63/20*** *(2006.01)*    ***C08J 5/18*** *(2006.01)*

(21) Application number: **07253434.0**

(22) Date of filing: **31.08.2007**

(54) **Heat-shrinkable pet film and method for making the same**

Wärmeschrumpfbare PET-Folie und deren Herstellungsverfahren

Film de PET thermorétrécissable et son procédé de fabrication

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **01.09.2006 CN 200610128532**

(43) Date of publication of application:
**05.03.2008 Bulletin 2008/10**

(73) Proprietor: **Far Eastern New Century Corporation Taipei (TW)**

(72) Inventors:
• **Liu, Pang Chin**
**Taoyuan (TW)**
• **Wu, Chih-Heng**
**Taoyuan (TW)**
• **Chung, Cheng-Hsiang**
**Taoyuan (TW)**
• **Chu, Chih Wei**
**Taoyuan (TW)**
• **Wu, Roy**
**Taoyuan (TW)**

(74) Representative: **Thomson, Neil David et al**
**Boult Wade Tennant**
**Verulam Gardens**
**70 Gray's Inn Road**
**London WC1X 8BT (GB)**

(56) References cited:
**WO-A-2004/113043**

• **DATABASE CAPLUS [Online] CHEMICAL ABSTRACTS SERVICE, COLUMBUS, OHIO, US; MORIMOTO, OSAMU: "Polyesters for coatings, their compositions, and coated metal sheets with good processability, retort resistance, food stain resistance, and flavor retention suitable for food cans or beverage cans" XP002460741 retrieved from STN Database accession no. 2004:876551 & JP 2004 292664 A (TOYOBO KK) 21 October 2004 (2004-10-21)**
• **DATABASE WPI Week 199245 Derwent Publications Ltd., London, GB; AN 1992-368588 XP002460646 & JP 04 268338 A (MITSUBISHI RAYON CO LTD) 24 September 1992 (1992-09-24)**
• **DATABASE WPI Week 199615 Derwent Publications Ltd., London, GB; AN 1996-146952 XP002460647 & JP 08 034840 A (MITSUBISHI RAYON CO LTD) 6 February 1996 (1996-02-06)**
• **DATABASE WPI Week 199527 Derwent Publications Ltd., London, GB; AN 1995-203932 XP002460648 & JP 07 118408 A (MITSUBISHI RAYON CO LTD) 9 May 1995 (1995-05-09)**

**Description**

This invention relates to a PET material and a method for making the same, more particularly to a heat-shrinkable PET film produced from a PET material made from a composition containing a chain branching agent for enhancing the melt strength thereof.

Conventional polyethylene terephthalate (PET) materials are made from a PET composition containing a PET modifier, such as isophthalic acid (IPA), neopentyl glycol (NPG), or 1,4-cyclohexanedimethanol (CHDM). The modified PET material is thermally stretched at a stretching temperature (normally 10 to 15°C higher than the glass transition temperature ($T_g$) of the modified PET material) and is subsequently cooled so as to obtain a heat-shrinkable PET film that exhibits shape-memory characteristics which permit the heat-shrinkable PET film to be shrunk when heated to a temperature higher than the stretching temperature. The CHDM modified heat-shrinkable PET film can achieve a heat shrinkage ratio of 60% based on the standard of JIS Z1709. However, CHDM and its monomer are relatively expensive. The IPA modified heat-shrinkable PET film can also achieve a heat shrinkage ratio of about 60% based on the standard of JIS Z1709. However, it requires a longer shrinking time and a higher temperature (about 125"C) to reach the desired heat shrinkage ratio. The NPG modified heat-shrinkable PET film normally has a heat shrinkage ratio of less than 50% based on the standard of JIS Z1709, and requires an additional modifier to enhance the heat shrinkage ratio.

Double-bubble blowing techniques for film stretching have been used to place conventional stretching techniques due to their low capital and operating costs. However, since the conventional PET film has a linear molecular structure and a relatively low molecular weight, it has an insufficient strength for film stretching using double-bubble blowing techniques or double-bubble blown film extrusion techniques.

Therefore, the object of the present invention is to provide a PET material that can overcome at least one of the aforesaid drawbacks of the prior art.

Another object of this invention is to provide a method for making the PET material.

According to one aspect of the present invention, a PET material of a modified PET composition is provided. The modified PET composition comprises: terephthalic acid; ethylene glycol; a modifier selected from the group consisting of 1,3-dihydroxy-2-methylpropane, 1,3-dihydroxy-2-methylpropane alkoxylate, 2,5-dimethyl-2,5-hexanediol, and combinations thereof; and a chain branching agent selected from one of a non-cyclic compound and a cyclic compound. The non-cyclic compound has at least three functional groups, and the cyclic compound, after ring opening, has at least three functional groups. Each of the functional groups of each of the non-cyclic compound and the cyclic compound is selected from the group consisting of hydroxyl group, carboxyl group, amine group, epoxy group, NCO, and COOR, in which R represents a $C_1$-$C_{18}$ alkyl group.

According to another aspect of the present invention, a method for making a PET material comprises: (a) forming a PET film of a PET material of a modified PET composition that comprises: terephthalic acid; ethylene glycol; a modifier selected from the group consisting of 1,3-dihydroxy-2-methylpropane, 1,3-dihydroxy-2-methylpropane alkoxylate, 2,5-dimethyl-2,5-hexanediol, and combinations thereof; and a chain branching agent selected from the group consisting of 1,1,1,-Tris(hydroxylmethyl)propane, 1,1,1,-Tris(hydroxylmethyl)propane alkoxylate, pentaerythritol, pentaerythritol alkoxylate, Di-pentaerythritol, Di-pentaerythritol alkoxylate, Tri-pentaerythritol, glycerol, and combinations thereof; (b) thermally stretching the PET film in a stretching direction under a temperature ranging from 50°C to 130°C such that the ratio of the film thickness of the PET film after stretching to that of the PET film before stretching ranges from 0.2 to 0.95; and (c) cooling the thermally stretched PET film.

Other features and advantages of the present invention will become apparent in the following detailed description of the preferred embodiments of this invention, with reference to the accompanying drawing, in which:

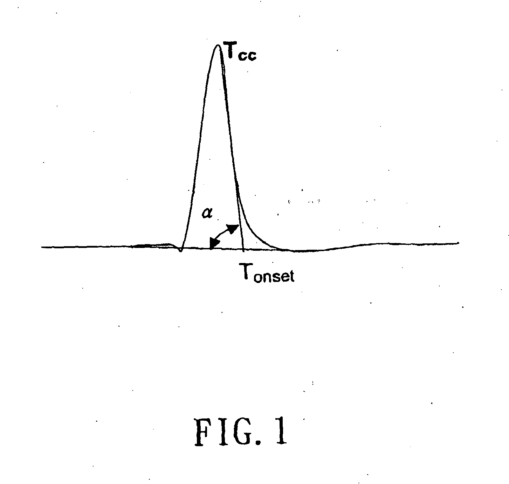

Fig. 1 is a DSC diagram showing a measured nucleation rate of a PET material.

It is known in the art that certain polymer films, when stretched under a stretching temperature higher than their glass transition temperatures ($T_g$) and lower than their melting points ($T_m$), have a common feature that large molecules of the amorphous region of the polymer film will be extended along the stretching direction. These extended large molecules are 'frozen', i.e., being set in shape, when cooled, and exhibit shape-memory characteristics or a heat-shrinkable ability. By virtue of this property, when a heat-shrinkable polymer film is heated to a temperature higher than the stretching temperature, the extended large molecules of the amorphous region of the polymer film begin to shrink along the stretching direction. Hence, it is possible to enhance the shrinking ability of a polymer film by increasing the extent of its amorphous phase, i.e., reducing the extent of its crystalline phase, by adding a modifier into a polymerization system to destroy nucleation and crystallization in the polymerization system. Furthermore, by adding a chain branching agent into the polymerization system to increase the degree of branches of the polymer, the melt strength of the polymer can be considerably enhanced, thereby rendering the polymer suitable for stretching using double-bubble film blowing techniques.

As indicated above, it is desirable to find a modifier which is less expensive and which can result in a shorter shrinking time for the heat-shrinkable PET film, and a chain branching agent which can enhance the strength of the PET film so that the latter can be stretched using double-bubble blowing techniques or double-bubble blown film extrusion techniques.

Accordingly, there is provided a PET material in this invention that can overcome at least one of the aforesaid drawbacks of the prior art. The PET material is made from a modified PET composition that comprises: terephthalic acid; ethylene glycol; a first modifier selected from the group consisting of 1,3-dihydroxy-2-methylpropane, 1,3-dihydroxy-2-methylpropane alkoxylate, 2,5-dimethyl-2,5-hexanediol, and combinations thereof; and a chain branching agent selected from one of a non-cyclic compound and a cyclic compound. The non-cyclic compound has at least three functional groups, and the cyclic compound, after ring opening, has at least three functional groups. Each of the functional groups of each of the non-cyclic compound and the cyclic compound is selected from the group consisting of hydroxyl group, carboxyl group, amine group, epoxy group, NCO, and COOR, in which R represents a $C_1$-$C_{18}$ alkyl group.

Preferably, the chain branching agent is selected from the group consisting of 1,1,1,-Tris(hydroxylmethyl) propane, 1,1,1,-Tris(hydroxylmethyl)propane alkoxylate, pentaerythritol, pentaerythritol alkoxylate, Di-pentaerythritol, Di-pentaerythritol alkoxylate, Tri-pentaerythritol, glycerol, and combinations thereof.

Preferably, the modified PET composition contains 0.01 to 2 mole% of the chain branching agent based on one mole of ethylene glycol, and more preferably contains 0.05 to 1 mole% of the chain branching agent based on one mole of ethylene glycol.

Preferably, the PET material has a glass transition temperature ranging from 40°C to 85°C, more preferably, from 60°C to 80°C, and most preferably, from 65°C to 75°C.

Preferably, the PET material has a melting point ranging from 170°C to 250°C.

Preferably, the PET material is amorphous.

Preferably, the modified PET composition contains 2 to 40 mole% of the first modifier based on one mole of ethylene glycol, and more preferably, contains 12 to 40 mole% of the first modifier based on one mole of ethylene glycol. When the amount of the first modifier is less than 2 mole%, the desired heat-shrinkage ratio cannot be achieved. When the amount of the first modifier is greater than 40 mole%, the raw material cost is considerably increased, and the mechanical strength and thermal resistance are decreased. The applicants found that the PET material has a melting point ranging from 170 to 250°C when the amount of the first modifier ranges from 2 to 20 mole%, and is amorphous when the amount of the first modifier ranges from 20 to 40 mole%.

The PET material preferably has an intrinsic viscosity ranging from 0.6 to 1.2. When the intrinsic viscosity of the PET material is less than 0.6, the molecular weight of the PET material is too low to be suitable for processing. When the intrinsic viscosity of the PET material is greater than 1.2, stirring of the PET material is difficult, which can result in deterioration in the quality of the product formed from the PET material.

Preferably, the modified PET composition further includes a second modifier selected from the group consisting of a diacid, a diol, and combinations thereof.

The diol of the second modifier is preferably selected from the group consisting of neopentyl glycol, isopentyl diol, polyethylene glycol, bisphenol A alkoxylate, 1,4-cyclohexanedimethanol, and combinations thereof, and is preferably present in an amount ranging from 1 to 40 mole%, and more preferably, from 1 to 30 mole%, based on one mole of ethylene glycol. When the second diol is a mixture of polyethylene glycol, bisphenol A alkoxylate, and 1,4-cyclohexanedimethanol, the PET material thus formed can be enhanced in properties, such as tensile strength, impact strength, and heat-shrinkable ratio.

The diacid of the second modifier is preferably selected from the group consisting of isophthalic acid, sebacid acid, naphthalene dicarboxylic acid, adipic acid, and combinations thereof, and is preferably present in an amount ranging from 1 to 30 mole%, and more preferably, from 2 to 20 mole%, based on one mole of ethylene glycol. When isophthalic acid is used as the second modifier, the amorphous phase region of the PET material can be increased. When adipic acid or sebacid acid is used as the secondmodifier, flexibility of the PET material thus formed can be increased. When naphthalene dicarboxylic acid is used as the second modifier, the glass transition temperature, the thermal resistance and the impact strength of the PET material thus formed can be increased.

Additives, such as silica, silicon dioxide gel, aluminum oxide, caoline, calcium carbonate, titanium oxide, and barium sulfate, can be added into the modified PET composition.

The method for making a PET film according to this invention includes the steps of: (a) forming the PET filmof the PETmaterial of the modified PET composition; (b) thermally stretching the PET film in a stretching direction under a temperature ranging from 50°C to 130°C such that the ratio of the film thickness of the PET film after stretching to that of the PET film before stretching ranges from 0.2 to 0.95; and (c) cooling the thermally stretched PET film.

Preferably, the thermally stretched PET film body has a film thickness ranging from 0.01mm to 0.1mm.

In this embodiment, thermal stretching of the PET film is conducted by double bubble blown film extrusion techniques and the PET film stretching operation is conducted along two perpendicular directions, i.e., MD and TD directions based on the standard of JIS Z1709.

Preferably, the stretching temperature is 10 to 15°C higher than the glass transition temperature of the PET material, and the temperature for shrinking the stretched PET film is 10 to 15°C higher than the stretching temperature. Hence, the stretching temperature for stretching the PET film preferably ranges from 50°C to 100°C, and more preferably, from 70 to 90°C, and the temperature for shrinking the stretched PET film preferably ranges from 65 to 115 °C, and more preferably, from 85 to 100°C.

The heat-shrinkage ratio of the heat-shrinkable PET film of this invention can be adjusted by adjusting the modified PET composition, the stretching extent, and the stretching temperature based on the actual requirements. For instance, according to the standard of JIS Z1709, a heat-shrinkable PET film having: a heat-shrinkage ratio of greater than 30% in one of MD (machine direction) and TD (transverse direction) directions and a heat-shrinkage ratio of less than 10% in the other of the MD and TD directions is suitable for application to shrinkable labels; a heat-shrinkage ratio of greater than 30% in both the MD and TD directions is suitable for application to general containers, batteries, and parts; a heat-shrinkage ratio of greater than 50% in one of the MD and TD directions is suitable for application to particular containers having curved or unusual shapes; and a heat-shrinkage ratio of greater than 50% in both the MD and TD directions is suitable for application to irregular shaped articles.

As mentioned above, the heat-shrinkage ratio of a heat-shrinkable film is mainly affected by the extent of the amorphous region, which can be controlled by addition of a modifier into the polymerization system during polymerization of the PET material. Hence, the higher the crystalline extent, the poorer will be the heat-shrinkage ratio of the heat-shrinkable film. The crystalline extent of a PET material can be determined by measuring a nucleation rate (tan $\alpha$), and a crystallization rate (G), which will be described in greater detail in the following paragraphs.

**Testing method:**

**Determining the nucleation rate:**

Placing a specimen of a heat-shrinkable PET film to be tested in a Differential Scanning Calorimetry (DSC) Instrument; Raising a working temperature of the instrument at a rate of 10°C/min. from 30 to 300°C; and Lowering immediately the working temperature at a rate of 10°C/min. from 300 to 30°C.

A crystallization peak as illustrated in Fig. 1 is obtained through this DSC analysis. An angle $\alpha$ between the slope (the sharpest slope of the peak) and the baseline is determined. The nucleation rate is represented by tan $\alpha$. The higher the value of tan$\alpha$, the higher will be the nucleation rate and the higher will be the extent of the crystalline phase for the heat-shrinkable PET film. $T_{cc}$ represents the crystallization temperature. $T_{onset}$ represents the temperature at an intersection of the baseline and the slope line.

**Determining the crystallization rate:**

Placing a specimen of a heat-shrinkable PET film to be tested in a Differential Scanning Calorimetry (DSC) Instrument; Raising a working temperature of the instrument at a rate of 160°C/min. from 30 to 280°C under a nitrogen gas flow rate of 50ml/min.; Maintaining the working temperature at 280°C for 5 min.; Lowering immediately the working temperature at a rate of 160°C/min. from 280°C to a crystallization temperature; and Recording and calculating the half time crystallization and crystallization rate using Avrami equation, log{-ln[1-X(t)]} = log(k)+ n log(t). X(t) is the crystallization degree at time (t). k is a crystallization constant. N is Avrami index. The half time crystallization (the time to reach 50% crystallization) is represented by $t_{1/2}$, which is equal to $(ln2/k)^{1/n}$. The crystallization rate is represented by G, which is equal to 1/ $t_{1/2}$. The higher the value of G, the higher will be the crystallization rate.

The merits of the heat-shrinkable PET film of this invention will become apparent with reference to the following Examples and Comparative Examples.

**Examples**

**Nucleation rate and crystallization rate experiments**

**Example 1 (E1)**

Terephthalic acid, ethylene glycol, and 1,3-dihydroxy-2-methylpropane (DHMP) (serving as the first modifier) in a mole ratio of 1:1.175:0.075 were uniformly mixed in a container and were formed into a paste. A stabilizer (75ppm) was added into and blended with the mixture. The paste was fed into an esterification reactor and underwent esterification under a pressure of about 3kg/cm$^2$ for 6 to 7 hours. The reaction temperature reached about 250°C at the end of the reaction. The mixture was then fed together with a catalyst of a mixture of $Sb_2O_3$ (300ppm) and cobalt acetate (50ppm), into a condensation rector and underwent condensation. The reactor temperature was raised to 285°C and the reactor was vacuumed to about 1 torr in two hours. The condensation was terminated when the intrinsic viscosity of the reaction product reached a range of from 0.7 to 0.9. The duration of the reaction time was about 4 to 5 hours.

**Example 2 (E2)**

The reaction conditions of this example were similar to those of Example 1, except that the first modifier was 1,3-dihydroxy-2-methylpropane alkoxylate (DHMPEO).

**Comparative Examples 1-4 (CE1-4)**

The reaction conditions of each of the comparative examples were similar to those of Example 1, except that comparative example 1 was without the first modifier and that the first modifiers for comparative examples 2-4 were respectively polyethylene glycol 600(PEG600), NPG, and CHDM.

**Comparative Example 5 (CE5)**

The reaction conditions of comparative example 5 were similar to those of Example 1, except that this comparative example was without the first modifier and that a portion of terephthalic acid was substituted with isophthalic acid (IPA). The mole ratio of terephthalic acid:IPA:ethylene glycol was 1:0.064:1.33.

**Comparative Example 6 (CE6)**

The reaction conditions of comparative example 6 were similar to those of Example 1, except that this comparative example was without the first modifier and that a portion of terephthalic acid was substituted with adipic acid (AA). The mole ratio of terephthalic acid:AA:ethylene glycol was 1:0.064:1.33.

Examples 1 and 2 and Comparative Examples 1-6 were subjected to the nucleation rate (tan $\alpha$) and the crystallization rate (G) tests. Table 1 shows the test results for Examples 1 and 2 and Comparative Examples 1-6.

Table 1

| | E1 | E2 | CE1 | CE2 | CE3 | CE4 | CE5 | CE6 |
|---|---|---|---|---|---|---|---|---|
| $T_{cc}$-$T_{onset}$ °C | 20 | 27.6 | 9.1 | 9.0 | 16.6 | 15.8 | 15.0 | 12.6 |
| $\alpha$, **degree** | 55 | 38 | 84 | 70 | 60 | 75 | 75 | 80 |
| **tan** $\alpha$ | 1.41 | 0.78 | 9.51 | 2.74 | 1.73 | 3.73 | 3.73 | 5.67 |
| $t_{1/2}$ **min** | 4.296 | 5.118 | 1.47 | 1.876 | 3.443 | 4.321 | 4.238 | 3.409 |
| **G l/min** | 0.23 | 0.2 | 0.68 | 0.53 | 0.29 | 0.23 | 0.24 | 0.29 |

The results show that Examples 1 and 2 (E1 and E2) have a lower nucleation rate and a lower crystallization rate than those of Comparative Examples (CE1-6).

**Shrinkage experiments**

**Example 3**

Terephthalic acid, ethylene glycol, 1,3-dihydroxy-2-methylpropane and 1, 1, 1,-Tris(hydroxylmethyl)propane in a mole ratio of 1:0.998:0.249:0.003 were uniformly mixed in a container and were formed into a paste. A stabilizer (75ppm) was added into and blended with the mixture. The paste was fed into an esterification reactor and underwent esterification under a pressure of about 3kg/cm² for 6 to 7 hours. The reaction temperature reached about 250°C at the end of the reaction. The mixture was then fed together with a catalyst of a mixture of $Sb_2O_3$ (300ppm) and cobalt acetate (50ppm), into a condensation rector and underwent condensation. The reactor temperature was raised to 285°C and the reactor was vacuumed to about 1 torr in two hours. The condensation was terminated when the intrinsic viscosity of the reaction product reached a range of from 0.7 to 0.9. The duration of the reaction time was about 4 to 5 hours. The product thus formed, having a Tq of 70°C, was dried under a temperature of 60°C for 12 hours, and was fed into an extruder (L/D = 32, φ=45, compression ratio = 3.0) under a working temperature of from 180 to 215°C so as to form a PET film. The PET film thus formed was cut into a sheet of 1650mm in width and 110mm in thickness, which was thermally stretched 2.7 times of the original length in a transverse direction under a temperature of 78 °C to form the sheet with a thickness of 40 μm. Subsequently, the sheet was bisected in the transverse direction (TD) and then trisected in the machine direction (MD) to obtain six specimens(A-F).
Each specimen was cut into a 100m m X 100mm piece which was placed in a water bath having a constant temperature of 95°C for 10 seconds. The heat shrinkage ratio of each specimen was calculated based on the following equation.

$$\texttt{Heat Shrinkage Ratio=[(L-l)/L] × 100\%,}$$

where L represents the length of the stretched specimen before being heated in the water bath and 1 represents the length of the stretched specimen after being heated in the water bath. Table 2 shows the shrinkage test results for the specimens A-F.

Table 2

| Example 3 | A | | B | | C | | D | | E | | F | |
|---|---|---|---|---|---|---|---|---|---|---|---|---|
| shrinkage ratio, % | MD | TD | MD | TD | MD | TD | MD | TD | MD | TD | MD | TD |
| | 4 | 62 | 4 | 62 | 0 | 62 | 1 | 70 | 2 | 69 | 3 | 68 |

The shrinkage test results show that the heat shrinkage ratio of the PET film thus formed can reach 70% in the TD direction and can be less than 4% in the MD direction, which demonstrates a significant improvement in the heat shrinkage property for the PET film made from the modified PET composition of this invention.

**Example 4**

The reaction conditions of this example were similar to those of Example 3, except that isophthalic acid (IPA) serving as a second modifier is further included in the modified PET composition. Themole ratio of terephthalic acid, ethylene glycol, 1,3-dihydroxy-2-methylpropane, 1,1,1,-Tris(hydroxylmethyl)propane and isophthalic acid was 1:1.118: 0.197:0.003:0.053. The PET film thus formed has a $T_g$ of 74°C.

**Example 5**

The reaction conditions of this example were the same as those of Example 3. The Melt flow index (MFI) of the reaction product thus formed is about 4 under a testing temperature of about 210°C and is about 6 under 230°C.
As known in the art, the MFI of a PET material suitable for double bubble blowing is preferably less than 10.

**Comparative Example 7**

The reaction conditions of this comparative example were similar to those of Example 3, except that the reaction mixture contained no chain branching agent and that the condensation time was more than 6 hours. The Melt flow index of the reaction product thus formed is about 13 under a testing temperature of about 210 °C, and is about 17 under 230°C. Both the Melt flow indexes at the two testing temperatures are higher than the suitable value, i.e., 10, for double bubble blowing.

**Example 6**

The reaction conditions of this example were similar to those of Example 3, except for the final process of forming the PET film. After drying under a temperature of 60°C for 12 hours, the PET product was fed into a blown film extruder (L/D = 25, φ=65) having working temperatures of 185, 190 and 195°C at different locations, a first die operated at 180°C and a second die operated at 190°C for subsequent double-bubble blowing operation using a double-bubble blowing apparatus. First, the PET extrudate from the extruder was stretched, and was further stretched by going through double bubble upward film blowing, cooling using air rings. Subsequently, the stretched PET film was wound onto a film take-up roll, followed by passing through three consecutive heating zones in an oven for further stretching. The three heating zones were operated at 110, 100, and 90°C , respectively. The width of the first air ring of the double-bubble blowing apparatus corresponding to the first bubble was about 200mm, and the width of the second air ring of the double-bubble blowing apparatus corresponding to the second bubble was about 400mm during the stretching operation.

The heat-shrinkage ratio of the PET film produced from the double bubble blown film extrusion is 15% in one of the MD and TD directions and is 58% in the other of the MD and TD directions based on the standard of JIS 21709 (under a stretching temperature of 90°C, and a shrinking temperature of 95°C for 10 seconds).

As illustrated in the shrinkage experiments, the modified PET film of this invention can be stretched by the double bubble blown film extrusion techniques, and its heat shrinkage ratio can reach 70%, which renders the PET material of this invention superior over the aforesaid conventional PET films.

It is noted that although no experiments were made for 2,5-dimethyl-2,5-hexanediol, this compound has asymmetric dimethyl groups and a longer chain length than that of ethylene glycol, wherein can result in a decrease in the nucleation rate and the crystallization rate of the PET polymerization system.

It has thus been shown that, by using 1,3-dihydroxy-2-methylpropane, 1,3-dihydroxy-2-methylpropane alkoxylate, 2,5-dimethyl-2,5-hexanediol, or a combination thereof as the first modifier and by using 1,1,1,-Tris(hydroxylmethyl) propane, 1,1,1,-Tris(hydroxylmethyl)propane alkoxylate, pentaerythritol, pentaerythritol alkoxylate, Di-pentaerythritol, Di-pentaerythritol alkoxylate, Tri-pentaerythritol, glycerol, or combinations thereof as the chain branching agent in the modified PET composition of this invention, the aforesaid drawbacks associated with the prior art can be eliminated.

**Claims**

1. A heat-shrinkable PET film made by film blowing a PET material of a modified PET composition comprising:

terephthalic acid;
ethylene glycol;
a first modifier selected from the group consisting of 1,3-dihydroxy-2-methylpropane, 1,3-dihydroxy-2-methylpropane alkoxylate, 2,5-dimethyl-2,5-hexanediol, and combinations thereof; and
a chain branching agent selected from one of a non-cyclic compound and a cyclic compound;
wherein said non-cyclic compound has at least three functional groups;
wherein said cyclic compound, after ring opening, has at least three functional groups; and
wherein each of said functional groups of each of said non-cyclic compound and said cyclic compound is selected from the group consisting of hydroxyl group, carboxyl group, amine group, epoxy group, NCO, and COOR, in which R represents a $C_1$-$C_{18}$ alkyl group; and
**characterized in that** said chain branching agent ranges from 0.01 to 2 mole% based on one mole of ethylene glycol.

2. The heat-shrinkable PET film of claim 1, wherein said chain branching agent is selected from the group consisting of 1,1,1,-Tris(hydroxylmethyl)propane, 1,1,1,-Tris(hydroxylmethyl)propane alkoxylate, pentaerythritol, pentaerythritol alkoxylate, Di-pentaerythritol, Di-pentaerythritol alkoxylate, Tri-pentaerythritol, glycerol, and combinations thereof.

3. The heat-shrinkable PET film of claim 1, wherein said modified PET composition contains 0.05 to 1 mole% of said chain branching agent based on one mole of ethylene glycol.

4. The heat-shrinkable PET film of claim 1, wherein said PET material has a glass transition temperature ranging from 40°C to 85°C.

5. The heat-shrinkable PET film of claim 1, wherein said PET material has a melting point ranging from 170°C to 250°C.

6. The heat-shrinkable PET film of claim 1, wherein said PET material is amorphous.

7. The heat-shrinkable PET film of claim 1, wherein said modified PET composition contains 2 to 40 mole% of said first modifier based on one mole of ethylene glycol.

8. The heat-shrinkable PET film of claim 1, wherein said PET material has an intrinsic viscosity ranging from 0.6 to 1.2.

9. The heat-shrinkable PET film of claim 1, wherein said modified PET composition further comprises a second modifier selected from the group consisting of a diacid, a diol, and combinations thereof.

10. The heat-shrinkable PET film of claim 9, wherein said diol is selected from the group consisting of neopentyl glycol, isopentyl diol, polyethylene glycol, bisphenol A alkoxylate, 1,4-cyclohexanedimethanol, and combinations thereof.

11. The heat-shrinkable PET film of claim 10, wherein said modified PET composition contains 1 to 40 mole% of said diol based on one mole of ethylene glycol.

12. The heat-shrinkable PET film of claim 9, wherein said diacid is selected from the group consisting of isophthalic acid, sebacid acid, naphthalene dicarboxylic acid, adipic acid, and combinations thereof.

13. The heat-shrinkable PET film of claim 12, wherein said modified PET composition contains 1 to 30 mole% of said diacid based on one mole of terephthalic acid.

14. A heat shrinkable PET film made by film blowing of a PET material of a modified PET composition comprising:

   terephthalic acid; ethylene glycol; a modifier selected from the group consisting of 1,3-dihydroxy-2-methylpropane, 1,3-dihydroxy-2-methylpropane alkoxylate, 2,5-dimethyl-2,5-hexanediol, and combinations thereof; and a chain branching agent selected from the group consisting of 1,1,1,-Tris(hydroxylmethyl)propane, 1,1,1,-Tris (hydroxylmethyl)propane alkoxylate, pentaerythritol, pentaerythritol alkoxylate, Di-pentaerythritol, Di-pentaerythritol alkoxylate, Tri-pentaerythritol, glycerol and combinations thereof;

   **characterized in that** said chain branching agent ranges from 0.01 to 2 mole% based on one mole of ethylene glycol; and wherein said heat shrinkable PET film exhibits a heat-shrinkage ratio greater than 30% in one of MD and TD directions based on the standard of JIS Z1709.

15. The heat shrinkable PET film of claim 14, wherein said shrinkable PET film exhibits a heat-shrinkage ratio greater than 50% in said one of the MD and TD directions and a heat-shrinkage ratio of less than 10% in the other of the MD and TD directions based on the standard of JIS Z1709.

16. A method for making a heat-shrinkable PET film comprising:

   (a) forming a PET film by film blowing of a PET material of a modified PET composition that comprises: terephthalic acid; ethylene glycol; a modifier selected from the group consisting of 1,3-dihydroxy-2-methylpropane, 1,3-dihydroxy-2-methylpropane alkoxylate, 2,5-dimethyl-2,5-hexanediol, and combinations thereof; and a chain branching agent **characterized in that** the chain branching agent ranges from 0.01 to 2 mole% based on one mole of ethylene glycol and selected from the group consisting of 1,1,1,-Tris(hydroxylmethyl)propane, 1,1,1,-Tris (hydroxylmethyl)propane alkoxylate, pentaerythritol, pentaerythritol alkoxylate, Di-pentaerythritol, Di-pentaerythritol alkoxylate, Tri-pentaerythritol, glycerol and combinations thereof;
   (b) thermally stretching the PET film through film blowing techniques in a stretching direction under a temperature ranging from 50°C to 130°C such that the ratio of the film thickness of the PET film after stretching to that of the PET film before stretching ranges from 0.2 to 0.95; and
   (c) cooling the thermally stretched PET film, **characterized in that** the chain branching agent ranges from 0.01 to 2 mole% based on one mole of ethylene glycol.

17. The method of claim 16, wherein the thermally stretching operation in step (b) is conducted at a temperature ranging from 70°C to 95°C.

**Patentansprüche**

1. Wärmeschrumpfbare PET-Folie, hergestellt durch Folienblasen eines PET-Materials einer modifizierten PET-Zusammensetzung, umfassend:

   Terephthalsäure;
   Ethylenglykol;
   ein erstes Modifizierungsmittel, ausgewählt aus der Gruppe, bestehend aus 1,3-Dihydroxy-2-methylpropan, 1,3-Dihydroxy-2-methylpropanalkoxylat, 2,5-Dimethyl-2,5-hexandiol und Kombinationen davon; und
   ein Kettenverzweigungsmittel, ausgewählt aus einem aus einer nichtzyklischen Verbindung und einer zyklischen Verbindung;
   worin die nichtzyklische Verbindung mindestens drei funktionelle Gruppen aufweist;
   worin die zyklische Verbindung nach Ringöffnung mindestens drei funktionelle Gruppen aufweist; und
   worin jede der funktionellen Gruppen von jeweils der nichtzyklischen Verbindung und der zyklischen Verbindung ausgewählt ist aus der Gruppe, bestehend aus einer Hydroxylgruppe, Carboxylgruppe, Amingruppe, Epoxygruppe, NCO und COOR, worin R eine $C_1$-$C_{18}$-Alkylgruppe darstellt; und
   **dadurch gekennzeichnet, dass** das Kettenverzweigungsmittel in einem Bereich von 0,01 bis 2 Mol%, bezogen auf ein Mol Ethylenglkol, vorliegt.

2. Wärmeschrumpfbare PET-Folie nach Anspruch 1, worin das Kettenverzweigungsmittel ausgewählt ist aus der Gruppe, bestehend aus 1,1,1-Tris(hydroxylmethyl)propan, 1,1,1-Tris(hydroxylmethyl)propanalkoxylat, Pentaerythritol, Pentaerythritolalkoxylat, Di-pentaerythritol, Di-pentaerythritolalkoxylat, Tri-pentaerythritol, Glycerol und Kombinationen davon.

3. Wärmeschrumpfbare PET-Folie nach Anspruch 1, worin die modifizierte PET-Zusammensetzung 0,05 bis 1 Mol% des Kettenverzweigungsmittels, bezogen auf ein Mol Ethylenglykol, enthält.

4. Wärmeschrumpfbare PET-Folie nach Anspruch 1, worin das PET-Material eine Glasübergangstemperatur im Bereich von 40 °C bis 85 °C hat.

5. Wärmeschrumpfbare PET-Folie nach Anspruch 1, worin das PET-Material einen Schmelzpunkt im Bereich von 170 °C bis 250 °C hat.

6. Wärmeschrumpfbare PET-Folie nach Anspruch 1, worin das PET-Material amorph ist.

7. Wärmeschrumpfbare PET-Folie nach Anspruch 1, worin die modifizierte PET-Zusammensetzung 2 bis 40 Mol% des ersten Modifizierungsmittels, bezogen auf ein Mol Ethylenglykol, enthält.

8. Wärmeschrumpfbare PET-Folie nach Anspruch 1, worin das PET-Material eine innere Viskosität im Bereich von 0,6 bis 1,2 hat.

9. Wärmeschrumpfbare PET-Folie nach Anspruch 1, worin die modifizierte PET-Zusammensetzung weiterhin ein zweites Modifizierungsmittel umfasst, ausgewählt aus der Gruppe, bestehend aus einer Disäure, einem Diol und Kombinationen davon.

10. Wärmeschrumpfbare PET-Folie nach Anspruch 9, worin das Diol ausgewählt ist aus der Gruppe, bestehend aus Neopentylglykol, Isopentyldiol, Polyethylenglykol, Bisphenol A-alkoxylat, 1,4-Cyclohexandimethanol und Kombinationen davon.

11. Wärmeschrumpfbare PET-Folie nach Anspruch 10, worin die modifizierte PET-Zusammensetzung 1 bis 40 Mol% des Diols, bezogen auf ein Mol Ethylenglykol, enthält.

12. Wärmeschrumpfbare PET-Folie nach Anspruch 9, worin die Disäure ausgewählt ist aus der Gruppe, bestehend aus Isophthalsäure, Sebacinsäure, Naphthalindicarbonsäure, Adipinsäure und Kombinationen davon.

**13.** Wärmeschrumpfbare PET-Folie nach Anspruch 12, worin die modifizierte PET-Zusammensetzung 1 bis 30 Mol% der Disäure, bezogen auf ein Mol Terephthalsäure, enthält.

**14.** Wärmeschrumpfbare PET-Folie, hergestellt durch Folienblasen eines PET-Materials aus einer modifizierten PET-Zusammensetzung, umfassend:

Terephthalsäure; Ethylenglykol; ein Modifizierungsmittel, ausgewählt aus der Gruppe, bestehend aus 1,3-Dihydroxy-2-methylpropan, 1,3-Dihydroxy-2-methylpropanalkoxylat, 2,5-Dimethyl-2,5-hexandiol und Kombinationen davon; und ein Kettenverzweigungsmittel, ausgewählt aus der Gruppe, bestehend aus 1,1,1-Tris(hydroxylmethyl)propan, 1,1,1-Tris(hydroxylmethyl)propan-alkoxylat, Pentaerythritol, Pentaerythritolalkoxylat, Di-pentaerythritol, Di-pentaerythritolalkoxylat, Tri-pentaerythritol, Glycerol und Kombinationen davon;

**dadurch gekennzeichnet, dass** das Kettenverzweigungsmittel im Bereich von 0,01 bis 2 Mol%, bezogen auf ein Mol Ethylenglykol, vorliegt; und worin die wärmeschrumpfbare PET-Folie ein Wärmeschrumpfverhältnis von größer als 30% in einer aus der MD- und TD-Richtung, basierend auf dem Standard von JIS Z1709, zeigt.

**15.** Wärmeschrumpfbare PET-Folie nach Anspruch 14, worin die schrumpfbare PET-Folie ein Wärmeschrumpfverhältnis von größer als 50% in einer aus der MD- und TD-Richtung und ein Wärmeschrumpfverhältnis von weniger als 10 % in der anderen Richtung aus der MD- und TD-Richtung, basierend auf dem Standard von JIS Z1709, zeigt.

**16.** Verfahren zu Herstellen einer wärmeschrumpfbaren PET-Folie, umfassend:

(a) Bilden einer PET-Folie durch Folienblasen eines PET-Materials aus einer modifizierten PET-Zusammensetzung, umfassend:

Terephthalsäure; Ethylenglykol; ein Modifizierungsmittel, ausgewählt aus der Gruppe, bestehend aus 1,3-Dihydroxy-2-methylpropan, 1,3-Dihydroxy-2-methylpropanalkoxylat, 2,5-Dimethyl-2,5-hexandiol und Kombinationen davon; und ein Kettenverzweigungsmittel, **dadurch gekennzeichnet, dass** das Kettenverzweigungsmittel im Bereich von 0,01 bis 2 Mol%, bezogen auf ein Mol Ethylenglykol, vorliegt, und ausgewählt ist aus der Gruppe, bestehend aus 1,1,1-Tris(hydroxylmethyl)propan, 1,1,1-Tris(hydroxylmethyl)propanalkoxylat, Pentaerythritol, Pentaerythritolalkoxylat, Di-pentaerythritol, Di-pentaerythritolalkoxylat, Tri-pentaerythritol, Glycerol und Kombinationen davon;

(b) Thermisches Strecken der PET-Folie durch Folienblastechniken in einer Streckrichtung unter einer Temperatur im Bereich von 50°C bis 130 °C, sodass das Verhältnis der Foliendicke der PET-Folie nach Streckung zu der PET-Folie vor Streckung im Bereich von 0,2 bis 0,95 liegt; und
(c) Kühlen der thermisch gestreckten PET-Folie, **dadurch gekennzeichnet, dass** das Kettenverzweigungsmittel in einem Bereich von 0,01 bis 2 Mol%, bezogen auf ein ol Ethylenglykol, vorliegt.

**17.** Verfahren nach Anspruch 16, worin der Vorgang des thermischen Streckens in Schritt (b) bei einer Temperatur im Bereich von 70°C bis 95 °C durchgeführt wird.

**Revendications**

**1.** Film de PET thermorétractable produit par soufflage d'un film d'un matériau PET constitué d'une composition de PET modifiée, comprenant :

de l'acide téréphtalique ;
de l'éthylèneglycol ;
un premier modificateur choisi dans le groupe consistant en le 1,3-dihydroxy-2-méthylpropane, un alkoxylate de 1,3-dihydroxy-2-méthylpropane, le 2,5-diméthyl-2,5-hexanediol et leurs associations ; et
un agent de ramification de chaîne choisi entre un composé non cyclique et un composé cyclique ;
dans lequel ledit composé non cyclique possède au moins trois groupes fonctionnels ;
dans lequel ledit composé cyclique, après ouverture du cycle, possède au moins trois groupes fonctionnels ; et
dans lequel chacun desdits groupes fonctionnels de chacun desdits composés consistant en le composé non cyclique et le composé cyclique est choisi dans le groupe consistant en un groupe hydroxyle, un groupe carboxyle, un groupe amine, un groupe époxy, un groupe NCO et un groupe COOR, dans lequel R représente un groupe alkyle en $C_1$ à $C_{18}$ ; et

**caractérisé en ce que** ledit agent de ramification de chaîne est présent en une quantité de 0,01 à 2 % en moles sur la base d'une mole d'éthylèneglycol.

2. Film de PET thermorétractable suivant la revendication 1, dans lequel ledit agent de ramification de chaîne est choisi dans le groupe consistant en le 1,1,1-tris-(hydroxyméthyl)propane, un alkoxylate de 1,1,1-tris-(hydroxyméthyl) propane, le pentaérythritol, un alkoxyate de pentaérythritol, le di-pentaérythritol, un alkoxylate de di-pentaérythritol, le tri-pentaérythritol, le glycérol et leurs associations.

3. Film de PET thermorétractable suivant la revendication 1, dans lequel ladite composition de PET modifiée contient 0,05 à 1 % en mole dudit agent de ramification de chaîne sur la base d'une mole d'éthylèneglycol.

4. Film de PET thermorétractable suivant la revendication 1, dans lequel ledit matériau PET a une température de transition vitreuse allant de 40°C à 85°C.

5. Film de PET thermorétractable suivant la revendication 1, dans lequel ledit matériau PET a un point de fusion allant de 170°C à 250°C.

6. Film de PET thermorétractable suivant la revendication 1, dans lequel ledit matériau PET est amorphe.

7. Film de PET thermorétractable suivant la revendication 1, dans lequel ladite composition de PET modifiée contient 2 à 40 % en moles dudit premier modificateur sur la base d'une mole d'éthylèneglycol.

8. Film de PET thermorétractable suivant la revendication 1, dans lequel ledit matériau PET a une viscosité intrinsèque allant de 0,6 à 1,2.

9. Film de PET thermorétractable suivant la revendication 1, dans lequel ladite composition de PET modifiée comprend en outre un second modificateur choisi dans le groupe consistant en un diacide, un diol et leurs associations.

10. Film de PET thermorétractable suivant la revendication 9, dans lequel ledit diol est choisi dans le groupe consistant en le néopentylglycol, l'isopentyldiol, le polyéthylèneglycol, un alkoxylate de bisphénol A, le 1,4-cyclohexanediméthanol et leurs associations.

11. Film de PET thermorétractable suivant la revendication 10, dans lequel ladite composition de PET modifiée contient 1 à 40 % en moles dudit diol sur la base d'une mole d'éthylèneglycol.

12. Film de PET thermorétractable suivant la revendication 9, dans lequel ledit diacide est choisi dans le groupe consistant en l'acide isophtalique, l'acide sébacique, l'acide naphtalènedicarboxylique, l'acide adipique et leurs associations.

13. Film de PET thermorétractable suivant la revendication 12, dans lequel ladite composition de PET modifiée contient 1 à 30 % en moles dudit diacide sur la base d'une mole d'acide téréphtalique.

14. Film de PET thermorétractable produit par soufflage d'un film d'un matériau PET constitué d'une composition de PET modifiée comprenant : de l'acide téréphtalique ; de l'éthylèneglycol ; un modificateur choisi dans le groupe consistant en le 1,3-dihydroxy-2-méthylpropane, un alkoxylate de 1,3-dihydroxy-2-méthylpropane, le 2,5-diméthyl-2,5-hexanediol et leurs associations ; et un agent de ramification de chaîne choisi dans le groupe consistant en le 1,1,1-tris(hydroxyméthyl)propane, un alkoxylate de 1,1,1-tris(hydroxyméthyl)propane, le pentaérythritol, un alkoxyate de pentaérythritol, le di-pentaérythritol, un alkoxylate de di-pentaérythritol, le tri-pentaérythritol, le glycérol et leurs associations ;

**caractérisé en ce que** ledit agent de ramification de chaîne est présent en une quantité de 0,01 à 2 % en mole sur la base d'une mole d'éthylèneglycol, et ledit film de PET thermorétractable présentant un rapport de retrait à chaud supérieur à 30 % dans une des directions DM et DT d'après la norme JIS Z1709.

15. Film de PET thermorétractable suivant la revendication 14, ledit film de PET thermorétractable présentant un rapport de retrait à chaud supérieur à 50 % dans ladite une des directions DM et DT et un rapport de retrait à chaud inférieur à 10 % dans l'autre des directions DM et DT d'après la norme JIS Z1709.

16. Procédé pour la production d'un film de PET thermorétractable, comprenant :

(a) la formation d'un film de PET par soufflage d'un film d'un matériau PET constitué d'une composition de PET modifiée comprenant : de l'acide téréphtalique ; de l'éthylèneglycol ; un modificateur choisi dans le groupe consistant en le 1,3-dihydroxy-2-méthylpropane, un alkoxylate de 1,3-dihydroxy-2-méthylpropane, le 2,5-diméthyl-2,5-hexanediol et leurs associations ; et un agent de ramification de chaîne, **caractérisé en ce que** ledit agent de ramification de chaîne est présent en une quantité de 0,01 à 2 % en moles sur la base d'une mole d'éthylèneglycol et est choisi dans le groupe consistant en le 1,1,1-tris(hydroxyméthyl)-propane, un alkoxylate de 1,1,1-tris(hydroxyméthyl)propane, le pentaérythritol, un alkoxylate de pentaérythritol, le di-pentaérythritol, un alkoxylate de di-pentaérythritol, le tri-pentaérythritol, le glycérol et leurs associations ;
(b) l'étirage thermique du film de PET par des techniques de soufflage de film dans une direction d'étirage à une température allant de 50°C à 130°C de telle sorte que le rapport de l'épaisseur du film de PET par étirage à celle du film de PET avant étirage soit de 0,2 à 0,95 ; et
(c) le refroidissement du film de PET ayant subi l'étirage thermique,

**caractérisé en que** ledit agent de ramification de chaîne est présent en une quantité de 0,01 à 2 % en moles sur la base d'une mole d'éthylèneglycol.

17. Procédé suivant la revendication 16, dans lequel l'opération d'étirage thermique dans l'étape (b) est mise en oeuvre à une température allant de 70°C à 95°C.

FIG. 1